# EUROPÄISCHE PATENTANMELDUNG

(11) **EP 2 237 077 A2**
(43) Veröffentlichungstag der Anmeldung: **06.10.2010**
(21) Anmeldenummer: 10154650.5
(22) Anmeldetag: 25.02.2010
(51) Int. Cl.: G01V 8/14

(54) **Lichtschrankenvorrichtung**

(30) Priorität: 03.04.2009 DE 102009017466
(71) Anmelder: BALLUFF GmbH, 73765 Neuhausen (DE)
(72) Erfinder: Mahr, Heiko, 71272, Renningen (DE); Hornung, Stefan, 70499, Stuttgart (DE)
(74) Vertreter: Hoeger, Stellrecht & Partner Patentanwälte

(57) **Zusammenfassung**

Lichtschrankenvorrichtung (34), umfassend einen ersten Arm (36), an welchem eine Sendeeinrichtung (18) für Licht und eine Empfängereinrichtung (20) angeordnet sind, einen zweiten Arm (38), an welchem eine Reflektoreinrichtung (22) für Licht angeordnet ist, und eine Einstelleinrichtung (60), über welche ein Abstand des zweiten Arms zu dem ersten Arm und/oder eine Winkelposition des zweiten Arms zu dem ersten Arm feststellbar einstellbar ist.

## Beschreibung

Die Erfindung betrifft eine Lichtschrankenvorrichtung, umfassend einen ersten Arm und einen zweiten Arm.

Aus der DE 10 2005 059 859 A1 ist eine Lichtschranke mit einem, eine Basis sowie zwei im Wesentlichen zueinander parallele Schenkel aufweisenden U-förmigen Gehäuse, mit einem, am einen Schenkel angeordneten Sender und mit einem am anderen Schenkel angeordneten Empfänger sowie mit im Gehäuse angeordneten elektrischen und/oder elektronischen Bauteilen zum Betreiben der Lichtschranke bekannt. Die beiden Schenkel des Gehäuses weisen jeweils eine Ausnehmung auf, die beiden Schenkel des Gehäuses weisen jeweils ausgehend von dieser Ausnehmung eine durchgehende Durchbrechung auf und der jeweiligen Ausnehmung ist ein Verschlussdeckel zugeordnet, welcher im Bereich der Durchbrechung den Sender bzw. den Empfänger sowie weiterhin gegebenenfalls weitere elektrische und/oder elektronische Bauelemente aufweist. Es ist dabei die Länge der Basis des Gehäuses veränderbar.

Aus der DE 30 08 309 C2 ist eine Gabellichtschranke zur Erfassung mechanischer Bewegungen bekannt, bei der ein Sendergehäuse, in dem eine Lichtquelle angeordnet ist, und ein Empfängergehäuse, in dem eine lichtempfindliche Zelle angeordnet ist, vorgesehen sind, bei der Sender- und Empfängergehäuse identisch geformt und mechanisch miteinander verbunden sind und bei der Sender- und Empfängergehäuse ohne oder mit Zwischenstück miteinander starr verbunden sind.

Aus der DE 93 02 324 U1 ist eine Gabellichtschranke mit zwei an ihrem einen Ende über einen Gabelsteg fest miteinander verbundenen, das Licht leitenden Gabelschenkeln bekannt.

Aus der DE 10 2005 028 264 B4 ist eine Lichtschranke mit einem Lichtsender und mindestens einem Lichtempfänger sowie einem Träger der Lichtschranke zur Aufnahme des Lichtsenders und/oder des Lichtempfängers bekannt.

Aus der DE 199 24 470 A1 ist eine Reflexionslichtschranke zum Detektieren eines Objekts in einem Objektraum bekannt, umfassend eine Sendeeinheit und einen Reflektor, wobei die Reflexionslichtschranke eine doppelbrechende Schicht umfasst, die im Lichtweg zwischen dem Objektraum und dem Reflektor angeordnet ist.

Aus der DE 43 43 457 C1 ist eine optoelektronische Vorrichtung zum Erkennen von transparenten Gegenständen bekannt mit wenigstens einem einen Sendelichtstrahl emittierenden Sender, wenigstens einem Empfänger, polarisierenden Mitteln sowie einer Auswerteeinheit.

Aus der EP 1 498 747 A1 ist eine optoelektronische Vorrichtung zur Erfassung von auf einem mit einer Fördergeschwindigkeit bewegten Trägermedium angeordneten Objekten bekannt.

Aus der EP 1 234 904 A1 ist eine Vorrichtung zum Überwachen von Teilen einer Strickmaschine bekannt, welche einen Lichtführungskörper, einen Sender-Lichtwellenleiter und einen Empfänger-Lichtwellenleiter aufweist.

Aus der US 6,297,498 B1 ist ein modularer bogenförmiger Lichtvorhang bekannt, welcher gebildet ist durch die Kombination von geraden, gekurvten und gewinkelten Modulen.

Der Erfindung liegt die Aufgabe zugrunde, eine Lichtschrankenvorrichtung der eingangs genannten Art bereitzustellen, welche für die Erkennung von transparenten Gegenständen geeignet ist bzw. eine flexible Anpassung an Anwendungen erlaubt.

Die oben genannte Aufgabe wird erfindungsgemäß dadurch gelöst, dass die Lichtschrankenvorrichtung einen ersten Arm umfasst, an welchem eine Sendeeinrichtung für Licht und eine Empfängereinrichtung angeordnet sind, einen zweiten Arm umfasst, an welchem eine Reflektoreinrichtung für Licht angeordnet ist, und eine Einstelleinrichtung umfasst, über welche ein Abstand des zweiten Arms zu dem ersten Arm und/oder eine Winkelposition des zweiten Arms zu dem ersten Arm feststellbar einstellbar ist.

Bei der erfindungsgemäßen Lösung sind die Sendeeinrichtung und die Empfängereinrichtung an einem gemeinsamen Arm angeordnet. Die Reflektoreinrichtung, welche eine passive Einrichtung ist, ist an dem anderen Arm angeordnet. Dadurch ist es möglich, die aktiven Elemente der Lichtschrankenvorrichtung an dem ersten Arm zu konzentrieren. Es muss dadurch keine Stromversorgung für den zweiten Arm und keine Signalabführung für den zweiten Arm vorgesehen werden.

Durch die erfindungsgemäße Lichtschrankenvorrichtung ist es möglich, eine Transparenzerkennung durchzuführen. Es lässt sich eine ausreichende Abschwächung eines Lichtsignals erkennen, da mindestens ein zweifacher Lichtweg (von der Sendeeinrichtung zu der Reflektoreinrichtung und von der Reflektoreinrichtung zu der Empfängereinrichtung) vorliegt. Ein transparentes Objekt wird dadurch durch das Lichtsignal mindestens zweimal durchlaufen.

Die Lichtschrankenvorrichtung lässt sich auf einfache Weise an eine Anwendung anpassen, indem der Abstand und/oder die Winkelposition des zweiten Arms relativ zu dem ersten Arm eingestellt wird. Wenn der zweite Arm nur passive Elemente enthält, muss keine elektrische Verbindung zwischen dem ersten Arm und dem zweiten Arm vorgesehen werden, so dass die Einstellbarkeit auf einfache Weise realisierbar ist.

Wenn keine Winkelpositionierbarkeit des zweiten Arms zu dem ersten Arm vorgesehen ist, dann sind auch bei unterschiedlicher Abstandsposition des zweiten Arms zu dem ersten Arm Sendeeinrichtung, Reflektoreinrichtung und Empfängereinrichtung automatisch korrekt ausgerichtet, d. h. eine eingestellte Ausrichtung bleibt durch eine Einstellung der Abstandsposition erhalten.

Bei einer Ausführungsform ist der zweite Arm direkt an dem ersten Arm gelagert und insbesondere schwenkbar gelagert. Dadurch lässt sich auf einfache Weise eine bestimmte Winkelpositionierung des zweiten Arms zu dem ersten Arm einstellen.

Besonders vorteilhaft ist es, wenn der zweite Arm über eine Brückeneinrichtung mit dem ersten Arm verbunden ist. Über die Brückeneinrichtung, durch welche insbesondere der Abstand zwischen dem zweiten Arm und dem ersten Arm über Einstellung der Länge der Brückeneinrichtung feststellbar einstellbar ist, sich angepasst an eine Anwendung der Abstand zwischen dem zweiten Arm und dem ersten Arm gezielt einstellen.

Bei einer Ausführungsform umfasst die Brückeneinrichtung ein erstes Brückenelement, welches mit dem ersten Arm verbunden ist, und ein zweites Brückenelement, welches mit dem zweiten Arm verbunden ist, wobei das erste Brückenelement und das zweite Brückenelement miteinander lösbar fixierbar sind. Dadurch lässt sich auf einfache Weise eine Verschiebungsführung zur Abstandseinstellung zwischen dem zweiten Arm und dem ersten Arm erreichen.

Insbesondere ist eine Führungseinrichtung zur Verschiebung des ersten Brückenelements und des zweiten Brückenelements relativ zueinander vorgesehen. Durch entsprechende spielfreie Ausgestaltung des Brückenelements lässt es sich beispielsweise erreichen, dass eine parallele Orientierung des zweiten Arms zu dem ersten Arm auch bei Veränderung des Abstands erhalten bleibt.

Beispielsweise umfasst die Führungseinrichtung eine Ausnehmung, welche an einem der Brückenelemente gebildet ist. Über eine solche Ausnehmung lässt sich auf einfache Weise eine (Verschiebungs-)Führung realisieren.

Es ist dann günstig, wenn das andere Brückenelement in die Ausnehmung eingetaucht ist. Dadurch lässt sich das andere Brückenelement auf einfache Weise verschieben.

Bei einer Ausführungsform ist an dem anderen Brückenelement mindestens ein Durchtauchelement angeordnet, welches durch die Ausnehmung durchgetaucht ist. Mittels eines solchen Durchtauchelements lassen sich das erste Brückenelement und das zweite Brückenelement auf einfache Weise miteinander verklemmen, um eine bestimmte Abstandsposition zu fixieren. Das mindestens eine Durchtauchelement dient auch als Halteelement einer Verschiebungsführung.

Bei einer alternativen Ausführungsform weist eines der Brückenelemente eine Mehrzahl von beabstandeten Fixierungsausnehmungen auf, wobei in eine Fixierungsausnehmung ein Fixierungselement einer Feststelleinrichtung der Einstelleinrichtung eintauchbar ist. Die Fixierungsausnehmungen sind insbesondere in einer Reihe längs einer Verschiebungsrichtung des zweiten Arms relativ zu dem ersten Arm angeordnet. Durch Eintauchen eines Fixierungselements wird eine bestimmte Abstandsposition fixiert.

Es ist dann günstig, wenn die Einstelleinrichtung eine Feststelleinrichtung umfasst, welche an einem der Brückenelemente angeordnet ist und mindestens ein Fixierungselement für das andere Brückenelement aufweist. Dadurch lässt sich auf einfache Weise ein bestimmter Abstand zwischen dem zweiten Arm und dem ersten Arm einstellen.

Bei einer Ausführungsform ist das mindestens eine Fixierungselement eine Haltenase für eine Fixierungsausnehmung an dem anderen Brückenelement. Durch Eintauchen der Haltenase lässt sich auf einfache Weise eine bestimmte Abstandsposition fixieren und sichern.

Bei einer günstigen Ausführungsform ist die Feststelleinrichtung schwenkbar gelagert. Sie ist insbesondere in der Art einer Wippe ausgebildet. Dadurch lässt sich auf einfache Weise eine Fixierung und Lösung der Fixierung erreichen.

Günstig ist es dann, wenn die Feststelleinrichtung federbeaufschlagt ist, wobei zur Lösung einer Fixierung die Federkraft zu überwinden ist. Die Federkraft drückt beispielsweise eine Haltenase in eine Fixierungsausnehmung, um eine bestimmte Abstandsposition zu fixieren. Zur Lösung dieser Fixierung muss ein Anwender eine Lösekraft ausüben.

Vorteilhafterweise weist die Feststelleinrichtung mindestens einen Sperrstift zur einstellbaren Sperrung der Schwenkbarkeit auf. Durch entsprechende Anlage des Sperrstifts insbesondere an einer Oberfläche des entsprechenden Brückenelements lässt sich eine Schwenkbarkeit verhindern. Dadurch lässt sich ein unbeabsichtigtes Lösen einer Fixierungsstellung verhindern.

Bei einer Ausführungsform ist der zweite Arm parallel zu dem ersten Arm ausgerichtet. Dadurch ergibt sich eine Gabellichtschranke mit U-förmiger Gestalt.

Es ist auch möglich, dass ein Schwenklager vorgesehen ist, über welches der zweite Arm feststellbar schwenkbar an dem ersten Arm oder einer Brückeneinrichtung gelagert ist. Bei dieser Ausführungsform lässt sich auch die Winkelposition des zweiten Arms zu dem ersten Arm einstellen.

Ganz besonders vorteilhaft ist es, wenn alle aktiven Elemente der Lichtschrankenvorrichtung an dem ersten Arm angeordnet sind. Dadurch muss für den zweiten Arm keine elektrische Energieversorgung vorgesehen werden und es müssen keine elektrischen Signale abgeführt werden. Dadurch wiederum muss der zweite Arm nicht elektrisch mit dem ersten Arm verbunden werden und die relative Position des zweiten Arms relativ zu dem ersten Arm (Abstandsposition und/oder Winkelposition) lässt sich auf einfache Weise einstellen bei minimiertem konstruktiven Aufwand für die Lichtschrankenvorrichtung.

Aus dem gleichen Grund ist es günstig, wenn der zweite Arm frei von Kabeln und elektrischen Elementen ist.

Bei der erfindungsgemäßen Lösung ist mindestens eine Zweiwegigkeit für den Lichtweg zwischen dem ersten Arm und dem zweiten Arm vorgesehen. Dadurch lassen sich auch transparente Objekte erkennen.

Günstig ist es, wenn der Empfängereinrichtung ein Polarisationsfilter vorgelagert ist. Dadurch können auch spiegelnde Gegenstände sicher erkannt werden.

Ferner günstig ist es, wenn die Empfängereinrichtung eine Schalthysterese aufweist, welche die Unterscheidung der Abwesenheit eines Gegenstands im Strahlengang und der Anwesenheit eines transparenten Gegenstands im Strahlengang erlaubt. Die Detektion eines transparenten Gegenstands erfolgt insbesondere durch Auswerten der Strahlungsstärke an der Empfängereinrichtung. Durch eine Schalthysterese ist eine solche Auswertung ermöglicht.

Die nachfolgende Beschreibung bevorzugter Ausführungsformen dient im Zusammenhang mit den Zeichnungen der näheren Erläuterung der Erfindung. Es zeigen:
- Figur 1: eine schematische Darstellung eines Ausführungsbeispiels einer Lichtschrankenvorrichtung;
- Figur 2: ein weiteres Ausführungsbeispiel einer Lichtschrankenvorrichtung mit relativ zueinander verschieblichen Armen;
- Figur 3: einen Teilausschnitt eines weiteren Ausführungsbeispiels einer Lichtschrankenvorrichtung mit relativ zueinander verschieblichen Armen;
- Figur 4: eine Schnittansicht längs der Linie 4-4 gemäß Figur 3;
- Figur 5: ein weiteres Ausführungsbeispiel einer Lichtschrankenvorrichtung mit relativ zueinander verschieblichen und verschwenkbaren Armen; und
- Figur 6: ein weiteres Ausführungsbeispiel einer Lichtschrankenvorrichtung mit relativ zueinander verschwenkbaren Armen.

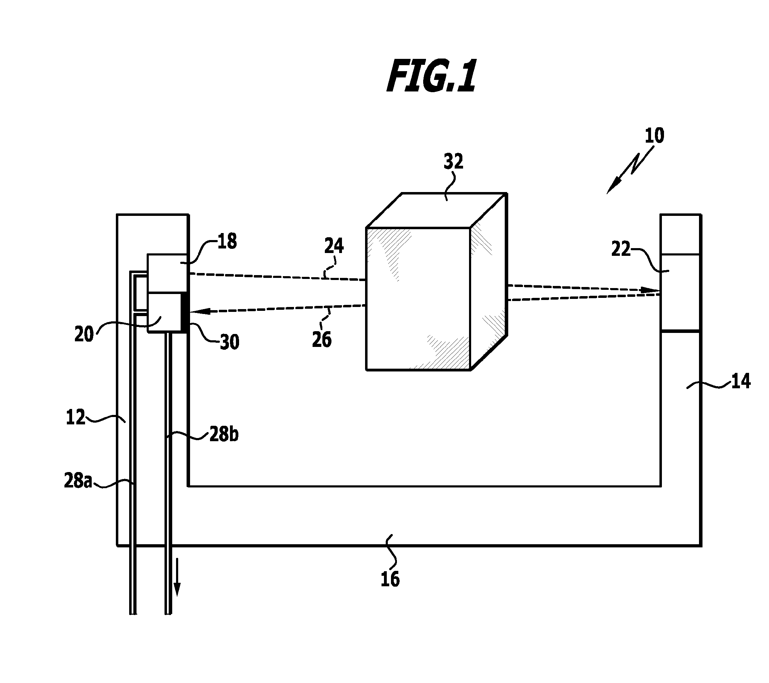

Ein Ausführungsbeispiel einer Lichtschrankenvorrichtung, welches in Figur 1 gezeigt und dort mit 10 bezeichnet ist, umfasst einen ersten Arm 12 (erster Schenkel) und einen zweiten Arm 14 (zweiter Schenkel). Der erste Arm 12 und der zweite Arm 14 sind parallel zueinander ausgerichtet.

Der erste Arm 12 und der zweite Arm 14 sind über eine Brückeneinrichtung 16 miteinander verbunden, welche quer und insbesondere senkrecht zu dem ersten Arm 12 und dem zweiten Arm 14 orientiert ist. Die Brückeneinrichtung 16 bildet eine Basis, von der die Arme 12 und 14 abstehen. Mit dem ersten Arm 12, dem zweiten Arm 14 und der Brückeneinrichtung 16 hat die Lichtschrankenvorrichtung 10 die Gestalt eines großen U.

Insbesondere hat die Lichtschrankenvorrichtung 10 eine Gabelform.

An dem ersten Arm 12 ist jeweils eine Sendeeinrichtung 18 für Licht und eine Empfängereinrichtung 20 für reflektiertes Licht angeordnet.

An dem zweiten Arm 14 ist eine Reflektoreinrichtung 22 für Licht angeordnet. Die Sendeeinrichtung 18, die Reflektoreinrichtung 22 und die Empfängereinrichtung 20 sind derart aufeinander ausgerichtet, dass Licht von der Sendeeinrichtung 18 in Richtung der Reflektoreinrichtung 22 emittiert wird und von der Reflektoreinrichtung 22 reflektiertes Licht die Empfängereinrichtung 20 trifft. Der Lichtlauf zwischen dem ersten Arm 12 und dem zweiten Arm 14 ist dadurch zweiwegig; er umfasst als ersten Weg den Weg zwischen der Sendeeinrichtung 18 und der Reflektoreinrichtung 22 (in Figur 1 durch das Bezugszeichen 24 angedeutet) und als zweiten Weg den Weg zwischen der Reflektoreinrichtung 22 und der Empfängereinrichtung 20 (in Figur 1 durch das Bezugszeichen 26 angedeutet).

Die Reflektoreinrichtung 22 ist eine rein passive Einrichtung, die keine Energiezuführung benötigt und keine elektrischen Signale abgibt. Der zweite Arm 14 ist kabelfrei und frei von elektrischen Bauelementen, die eine Energieversorgung benötigen und/oder elektrische Signale abgeben.

Die aktiven Elemente der Lichtschrankenvorrichtung 10, die eine elektrische Energieversorgung benötigen und/oder elektrische Signale abgeben, sind allein an dem ersten Arm 12 angeordnet. Entsprechende Kabel 28a, 28b zur Energieversorgung der Sendeeinrichtung 18 und der Empfängereinrichtung 20 bzw. zur Signalabführung sind an dem ersten Arm 12 positioniert.

Der Empfängereinrichtung 20 ist ein Polarisationsfilter 30 vorgeschaltet.

Die Empfängereinrichtung 20 ist so ausgebildet, dass sie eine Schalthysterese hat.

Die Sendeeinrichtung 18 umfasst als Lichtquelle beispielsweise eine Rotlicht-Leuchtdiode, eine Pinpoint-Leuchtdiode, eine Infrarot-Leuchtdiode oder eine Laserdiode.

Die passive Reflektoreinrichtung 22 ist beispielsweise durch eine reflektierende Folie, einen entsprechenden Spiegel oder Tripelspiegel gebildet.

Die Empfängereinrichtung 20 umfasst mindestens eine fotoelektrische Zelle.

Durch das Polarisationsfilter 30 können auch spiegelnde Gegenstände 32 sicher erkannt werden.

Die Lichtschrankenvorrichtung 10 eignet sich zur Detektion von transparenten Gegenständen 32. Diese werden sowohl im ersten Weg 24 als auch im zweiten Weg 26 durchstrahlt. Dadurch ergibt sich eine zweifache Abschwächung des Lichtsignals. Durch Auswerten der Strahlungsstärke an der Empfängereinrichtung 20 lässt sich ein transparenter Gegenstand 32 detektieren.

Es ist eine (geringe) Schalthysterese an der Empfängereinrichtung 20 vorzusehen, um die Detektion eines transparenten Gegenstands zu ermöglichen.

Vorzugsweise sind an dem ersten Arm 12 die Sendeeinrichtung 18 und die Empfängereinrichtung 20 direkt nebeneinander montiert. Insbesondere ist eine Sendeeinrichtung-Empfängereinrichtung-Kombination vorgesehen, welcher an einer Halterung an dem ersten Arm 12 montiert ist. Durch die entsprechende Montage ergibt sich bei entsprechender Ausrichtung der Reflektoreinrichtung 22, dass diese Ausrichtung immer erhalten bleibt. Dadurch wiederum ergibt sich eine einfache Montage und die Sendeeinrichtung 18 und/oder die Empfängereinrichtung 20 lässt sich auch auf einfache Weise austauschen.

Eine Transparenzerkennung ist auf einfache Weise möglich.

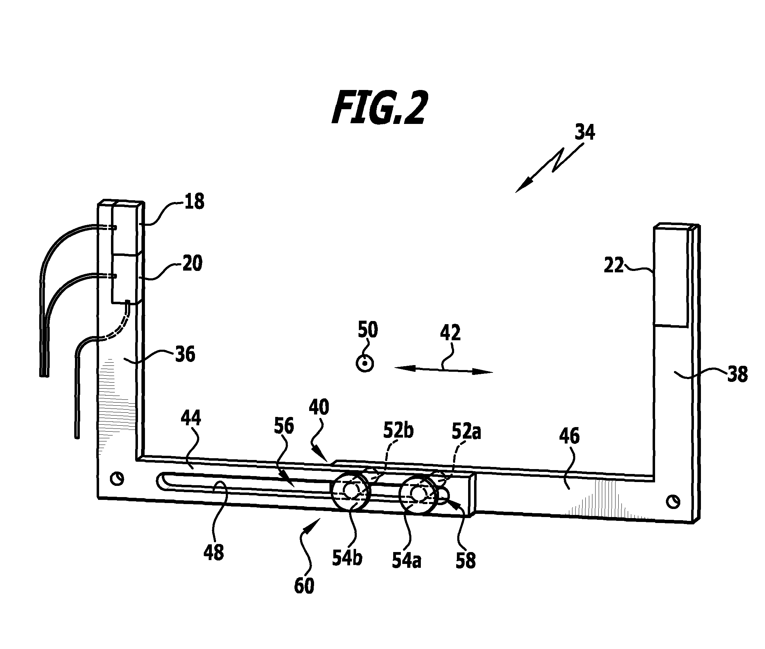

Bei einer weiteren Ausführungsform, welche in Figur 2 schematisch dargestellt und dort mit 34 bezeichnet ist, sind ein erster Arm 36 und ein zweiter Arm 38 vorgesehen. An dem ersten Arm 36 sind eine Sendeeinrichtung 18 und eine Empfängereinrichtung 20 angeordnet. An dem zweiten Arm 38 ist eine Reflektoreinrichtung 22 angeordnet. (Für gleiche Elemente wie bei der Lichtschrankenvorrichtung 10 werden gleiche Bezugszeichen verwendet.) An dem ersten Arm 36 sind die aktiven (elektrischen) Elemente angeordnet und an dem zweiten Arm 38 die passiven Elemente.

Der erste Arm 36 und der zweite Arm 38 sind über eine Brückeneinrichtung 40 verbunden. Der erste Arm 36 und der zweite Arm 38 sind parallel zueinander ausgerichtet. Die Brückeneinrichtung 40 ermöglicht eine Einstellbarkeit des Abstands des zweiten Arms 38 zu dem ersten Arm 36 in einer Richtung 42, welche quer und insbesondere senkrecht zu den Armen 36, 38 orientiert ist.

Die Brückeneinrichtung 40 umfasst ein erstes Brückenelement 44, welches fest mit dem ersten Arm 36 verbunden ist und dabei quer und insbesondere senkrecht mit einer Erstreckungsrichtung parallel zur Richtung 42 zu dem ersten Arm 36 orientiert ist.

Die Brückeneinrichtung 40 umfasst ferner ein zweites Brückenelement 46, welches fest mit dem zweiten Arm 38 verbunden ist und quer und insbesondere senkrecht zu diesem orientiert ist.

Das erste Brückenelement 44 weist dabei eine durchgehende Ausnehmung 48 auf, welche sich längs der Richtung 42 erstreckt und in einer Richtung 50 senkrecht zur Richtung 42 durchgehend ist. Die Richtung 50 ist in Figur 2 senkrecht zur Zeichenebene orientiert.

An dem zweiten Brückenelement 46 sind Stiftelemente 52a, 52b angeordnet, welche durch die Ausnehmung 48 durchgetaucht sind. Das zweite Brückenelement 46 liegt dabei unterhalb des ersten Brückenelements 44. An einer Oberseite der Stiftelemente 52a, 52b sind jeweilige Köpfe 54a, 54b angeordnet, durch welche sich das erste Brückenelement 44 und das zweite Brückenelement 46 klemmend miteinander fixieren lassen. Das erste Brückenelement 44 lässt sich dabei über die Köpfe 54a, 54b klemmend zwischen diesen Köpfen 54a, 54b und dem zweiten Brückenelement 46 fixieren. Dadurch wird eine bestimmte Abstandsposition zwischen dem ersten Arm 36 und dem zweiten Arm 38 fixiert.

Es ist dabei möglich, dass die Köpfe 54a, 54b an dem zugeordneten Stiftelement 52 bzw. 52b über eine Schraubverbindung gehalten sind, oder es ist möglich, dass die Köpfe 54a, 54b mit dem jeweiligen Stiftelement 52a bzw. 52b fest verbunden sind und dass die Stiftelemente 52a, 52b über eine Schraubverbindung an dem zweiten Brückenelement 46 fixiert sind.

Einander zugewandte Seiten des ersten Brückenelements 44 und des zweiten Brückenelements 46 gleiten aneinander. Durch Vorsehen beispielsweise einer Riffelung kann die Feststellwirkung erhöht werden.

Die Ausnehmung 48 bildet eine Führungseinrichtung 56 für eine (Verschiebungs-)Führung des zweiten Brückenelements 46 an dem ersten Brückenelement 44. Die Stiftelemente 52a, 52b sind Durchtauchelemente, welche durch die Ausnehmung 48 durchgetaucht sind. Sie weisen eine solche Breite senkrecht zur Richtung 42 auf, dass diese Durchtauchung in dieser Richtung ohne Spiel ist. Dadurch bleibt in jeder Position des ersten Brückenelements 44 relativ zu dem zweiten Brückenelement 46 die parallele Ausrichtung des zweiten Arms 38 zu dem ersten Arm 36 erhalten.

Die Stiftelemente 52a, 52b mit ihren Köpfen 54a, 54b bilden eine Feststelleinrichtung 58 einer Einstelleinrichtung 60 zur Einstellung der Abstandsposition zwischen dem zweiten Arm 38 und dem ersten Arm 36. Die Köpfe 54a, 54b sind Fixierungselemente der Feststelleinrichtung 58.

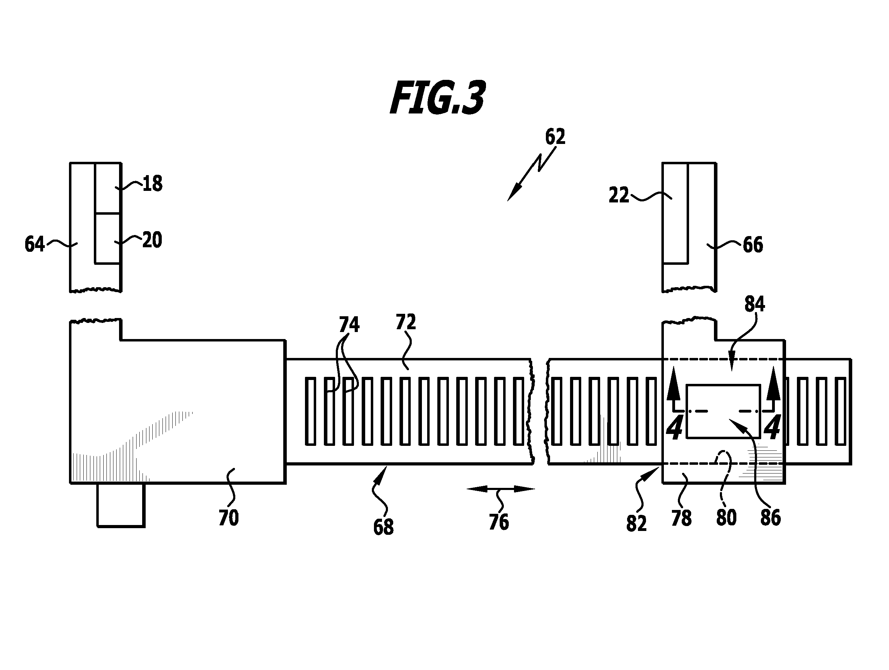

Ein drittes Ausführungsbeispiel einer Lichtschrankenvorrichtung, welches in Figur 3 gezeigt und dort mit 62 bezeichnet ist, umfasst einen ersten Arm 64 und eine zweiten Arm 66, wobei diese Arme 64 und 66 parallel zueinander ausgerichtet sind. An dem ersten Arm 64 sind wiederum eine Sendeeinrichtung 18 und eine Empfängereinrichtung 20 angeordnet. An dem zweiten Arm 66 ist eine Reflektoreinrichtung 22 angeordnet. Der erste Arm 64 und der zweite Arm 66 sind über eine Brückeneinrichtung 68 verbunden. Die Brückeneinrichtung 68 weist ein erstes Brückenelement 70 auf, welches fest mit dem ersten Arm 64 verbunden ist und quer und insbesondere senkrecht zu diesem orientiert ist. Das erste Brückenelement 70 umfasst dabei einen Bereich 72, in welchem eine Mehrzahl von diskret beabstandeten Fixierungsausnehmungen 74 angeordnet ist. Die Abfolge von Fixierungsausnehmungen 74 erstreckt sich in einer Abstandsrichtung 76 zwischen dem ersten Arm 64 und dem zweiten Arm 66. Die Abstandsrichtung 76 ist auch eine Verschiebungsrichtung zur Einstellung der Position zwischen dem ersten Arm 64 und dem zweiten Arm 66.

An dem zweiten Arm 66 ist ein zweites Brückenelement 78 angeordnet. Dieses zweite Brückenelement 78 weist eine Ausnehmung 80 auf, mittels welcher das zweite Brückenelement 78 auf den Bereich 72 des ersten Brückenelements 70 aufgeschoben ist. Die Ausnehmung 80 ist in ihren Abmessungen an die Abmessungen des Bereichs 72 derart angepasst, dass das zweite Brückenelement 78 außer in der Abstandsrichtung 76 spielfrei an dem ersten Brückenelement 70 gehalten ist, so dass unabhängig von der Position die Parallelität des ersten Arms 64 und des zweiten Arms 66 erhalten bleibt.

Die Ausnehmung 80 bildet eine Führungseinrichtung 82 für das erste Brückenelement 70. Das erste Brückenelement 70 ist in die Ausnehmung 80 eingetaucht. Über eine Einstelleinrichtung 84 lässt sich die Position des zweiten Brückenelements 78 an dem ersten Brückenelement 70 feststellbar einstellen und damit lässt sich auch die Abstandsposition des zweiten Arms 66 zu dem ersten Arm 64 einstellen.

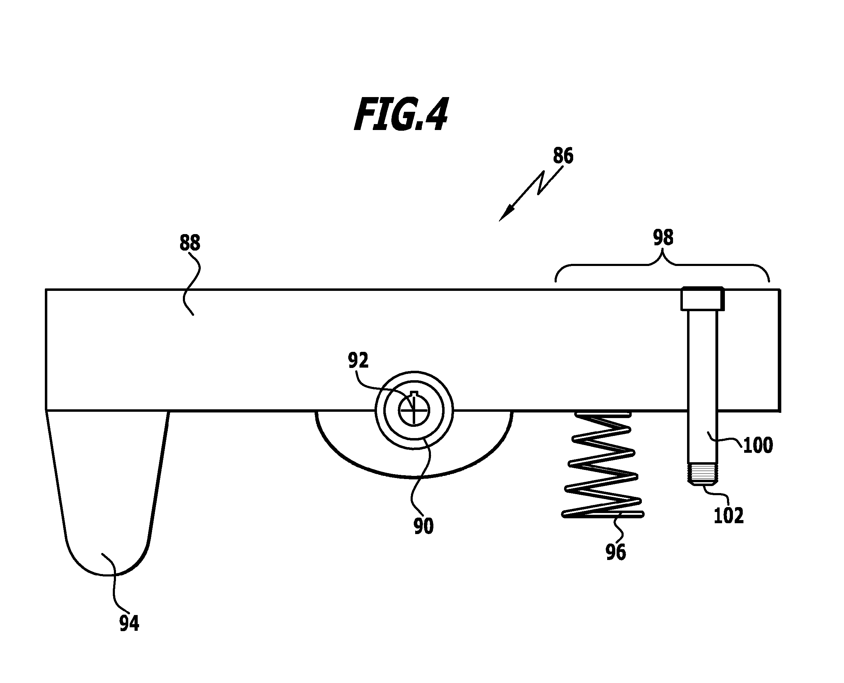

Dazu ist eine Feststelleinrichtung 86 vorgesehen (Figuren 3 und 4), welche an dem zweiten Brückenelement 78 angeordnet ist.

Die Feststelleinrichtung 86 weist ein Stegelement 88 auf, welches über ein Schwenklager 90 schwenkbar an dem zweiten Brückenelement 78 gelagert ist. Eine Schwenkachse 92 ist dabei quer und insbesondere senkrecht zu der Abstandsrichtung 76 orientiert.

An dem Stegelement 88 ist nach unten (an der Seite des Schwenklagers 90) hinausragend als Fixierungselement eine Haltenase 94 angeordnet. Die Haltenase 94 kann in eine Fixierungsausnehmung 74 eintauchen und dadurch eine Abstandsstellung zwischen dem zweiten Arm 66 und dem ersten Arm 64, vorgegeben durch die Position der Fixierungsausnehmung 74 an dem ersten Brückenelement 70, sichern.

Es ist dazu grundsätzlich möglich, dass an dem zweiten Brückenelement 78 eine Ausnehmung angeordnet ist, so dass die Haltenase 94 in eine Fixierungsausnehmung 74 eintauchen kann.

Alternativ ist es möglich, dass das Stegelement 88 eine solche Länge aufweist, dass es über das zweite Brückenelement 78 hinausragt und dadurch in eine Fixierungsausnehmung 74 eintauchen kann.

Zwischen dem Stegelement 88 und dem zweiten Brückenelement 78 ist eine Feder 96 angeordnet, welche so vorgespannt ist, dass ihre Federkraft nach oben wirkt in dem Sinne, dass sie das Stegelement 88 so nach oben drückt, dass die Haltenase 74 in Richtung einer Fixierungsausnehmung 94 und bei entsprechender Ausrichtung in diese eingetaucht gedrückt wird. Wenn die Haltenase 94 in eine entsprechende Fixierungsausnehmung 74 eintaucht, dann ist dadurch die entsprechende Abstandsstellung zwischen dem zweiten Arm 66 und dem ersten Arm 64 gesichert. Zur Lösung dieser Fixierung muss ein Bediener eine Gegenkraft ausüben, um das Stegelement 88 so zu verschwenken, dass die Haltenase 94 aus der Fixierungsausnehmung 74 austaucht. Ein Benutzer muss dazu eine entsprechende Kraft in einem Bereich 98 des Stegelements 88 ausüben.

An dem Stegelement 88 ist insbesondere über eine Gewindeführung (mindestens) ein Sperrstift 100 angeordnet, welcher zur einstellbaren Sperrung der Schwenkbarkeit dient. Dieser Sperrstift 100 hat ein unteres Ende 102, mit welchem er auf eine Oberseite des zweiten Brückenelements 78 wirken kann. Bei Wirkung des unteren Endes 102 eines Sperrstifts 100 auf das zweite Brückenelement 78 lässt sich eine Schwenkbarkeit sperren und dadurch auch bei Druckausübung auf den Bereich 98 ein Austauchen der Haltenase 94 aus einer Fixierungsausnehmung 74 verhindern. Wenn für einen Kontakt des unteren Endes 102 des Sperrstifts 100 mit dem zweiten Brückenelement 78 durch entsprechende Positionierung des Sperrstifts 100 gesorgt wird, dann lässt sich eine unbeabsichtigte Lösung einer definierten Abstandsstellung zwischen dem ersten Arm 64 und dem zweiten Arm 66 verhindern.

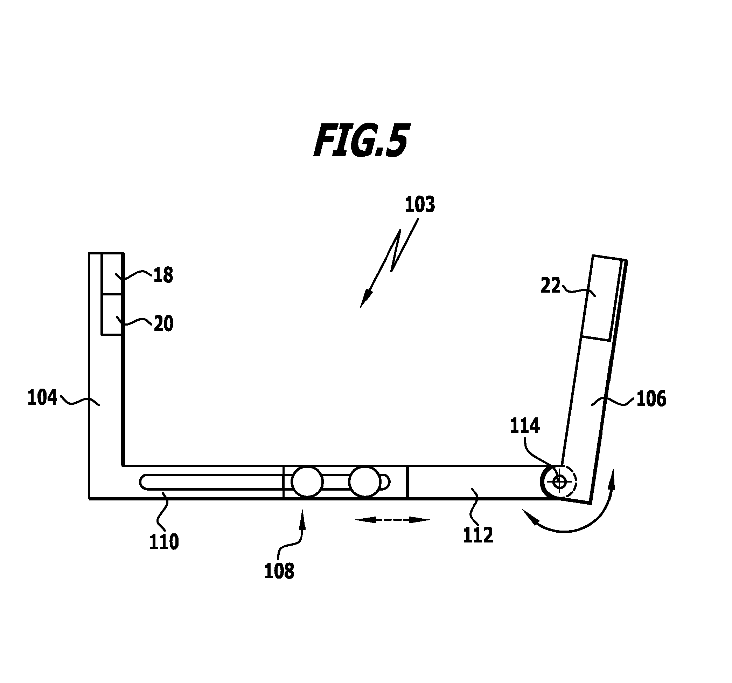

Ein weiteres Ausführungsbeispiel einer Lichtschrankenvorrichtung, welches in Figur 5 gezeigt und dort mit 103 bezeichnet ist, umfasst einen ersten Arm 104 mit Sendeeinrichtung 18 und Empfängereinrichtung 20, sowie einen zweiten Arm 106 mit einer Reflektoreinrichtung 22. Der erste Arm 104 und der zweite Arm 106 sind über eine Brückeneinrichtung 108 verbunden. Die Brückeneinrichtung 108 erlaubt eine Abstandseinstellung zwischen dem ersten Arm 104 und dem zweiten Arm 106. Dazu weist die Brückeneinrichtung ein erstes Brückenelement 110, welches mit dem ersten Arm 104 verbunden ist, und ein zweites Brückenelement 112, welches mit dem zweiten Arm 106 verbunden ist, auf. Die relative Position des ersten Brückenelements 110 und des zweiten Brückenelements 112 lässt sich beispielsweise, wie im Zusammenhang mit den Ausführungsformen 34 oder 62 beschrieben, einstellen.

Der zweite Arm 106 ist über ein Schwenklager 114 feststellbar schwenkbar an dem zweiten Brückenelement 112 gelagert. Dadurch lässt sich auch die Winkelausrichtung zwischen dem zweiten Arm 106 und dem ersten Arm 104 feststellbar einstellen.

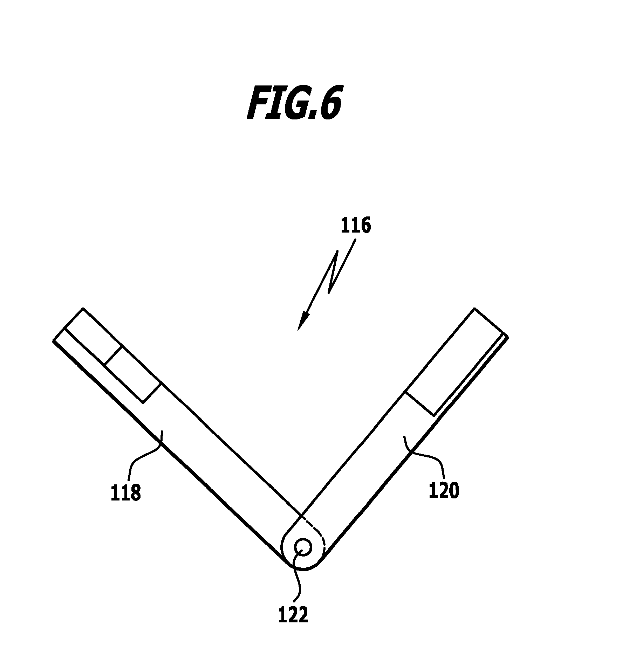

Bei einer weiteren Ausführungsform, welche in Figur 6 gezeigt und dort mit 116 bezeichnet ist, sind ein erster Arm 118 und ein zweiter Arm 120 vorgesehen. Der zweite Arm 120 ist dabei über ein Schwenklager 122 feststellbar schwenkbar an dem ersten Arm 118 gelagert. Dadurch lässt sich die relative Winkelposition zwischen dem ersten Arm 118 und dem zweiten Arm 120 einstellen.

Wenn der zweite Arm 106 bzw. 120 relativ zu dem ersten Arm 104 bzw. 118 schwenkbar ist, dann muss eine Ausrichtung der Sendeeinrichtung 18 und der Empfängereinrichtung 20 relativ zueinander für jede Schwenkstellung möglich sein, um die technische Funktionssicherheit zu gewährleisten. Die Sendeeinrichtung 18 und die Empfängereinrichtung 20 sind dann feststellbar beweglich an dem entsprechenden Arm gelagert und insbesondere schwenkbar gelagert. Ein Benutzer kann dann deren relative Position so verstellen, dass ein gesendeter Lichtstrahl auf die Reflektoreinrichtung 22 zeigt und die Empfängereinrichtung 20 reflektiertes Licht empfangen kann.

Zur Ausrichtung der optischen Achsen der Sendeeinrichtung 18 (Lichtquelle) und der Empfängereinrichtung 20 (Lichtempfänger) kann eine Gelenkeinrichtung vorgesehen sein, wie in der DE 20 2007 005 710 U1 beschrieben. Auf diese Druckschrift wird ausdrücklich Bezug genommen.

Beispielsweise kann es auch vorgesehen sein, dass an dem Gehäuse der Lichtschrankenvorrichtung 103 bzw. 116 eine oder mehrere Schrauben angeordnet sind. Eine Schraube greift an eine Lagereinrichtung an, durch welche die Sendeeinrichtung 18 und die Empfängereinrichtung 20 an dem Gehäuse gelagert sind. Durch Drehen der Schraube wird die relative Winkeleinstellung der Sendeeinrichtung 18 und der Empfängereinrichtung 20 (bezogen auf deren optische Achsen) geändert und damit die Ausrichtung der Sendeeinrichtung 18 zu der Empfängereinrichtung 20. Die Lagereinrichtung ist beispielsweise durch einen entsprechenden Kugelkopf realisiert.

Es kann ferner vorgesehen sein, dass die Lagereinrichtung Sperranschläge aufweist, so dass die Sendeeinrichtung 18 und die Empfängereinrichtung 20 nur innerhalb einer vorgegebenen maximalen Winkelstellung relativ zueinander ausgerichtet werden können. Beispielsweise sind nur maximale Stellwinkel zwischen 45° und einem maximalen Winkel kleiner 90° möglich.

Durch eine Verstellung der Abstandsposition zwischen einem ersten Arm und einem zweiten Arm und/oder einer feststellbaren Einstellbarkeit der Winkelposition zwischen dem ersten Arm und dem zweiten Arm ergibt sich eine flexible Anpassbarkeit an eine Anwendung. Es lassen sich Montagezeiten reduzieren und unter Umständen ist auch ein einfaches Austauschen und Montieren möglich. Wenn die Ausrichtung des ersten Arms zu dem zweiten Arm unabhängig von der Einstellung ist, dann ergibt sich auch eine vereinfachte Ausrichtung.

Wenn der zweite Arm keine Kabelführung und keine elektrischen Komponenten enthält, dann lässt sich die relative Positionierung zwischen dem ersten Arm und dem zweiten Arm auf einfache Weise durchführen und auch die Montage ist erleichtert.

## Patentansprüche

1. Lichtschrankenvorrichtung, umfassend einen ersten Arm (36; 64; 104; 118), an welchem eine Sendeeinrichtung (18) für Licht und eine Empfängereinrichtung (20) angeordnet sind, einen zweiten Arm (38; 66; 106; 120), an welchem eine Reflektoreinrichtung (22) für Licht angeordnet ist, und eine Einstelleinrichtung (60; 84), über welche ein Abstand des zweiten Arms (38; 66; 106; 120) zu dem ersten Arm (36; 64; 104; 118) und/oder eine Winkelposition des zweiten Arms (38; 66; 106; 120) zu dem ersten Arm (36; 64; 104; 118) feststellbar einstellbar ist.

2. Lichtschrankenvorrichtung nach Anspruch 1, **dadurch gekennzeichnet, dass** der zweite Arm (120) direkt an dem ersten Arm (118) gelagert ist.

3. Lichtschrankenvorrichtung nach Anspruch 9, **dadurch gekennzeichnet, dass** der zweite Arm (38; 66; 106) über eine Brückeneinrichtung (40; 68; 108) mit dem ersten Arm (36; 64; 104) verbunden ist, und insbesondere, dass zur Einstellung des Abstands zwischen dem zweiten Arm (40; 68; 108) und dem ersten Arm (36; 64; 104) eine Länge der Brückeneinrichtung (38; 66; 106) feststellbar einstellbar ist.

4. Lichtschrankenvorrichtung nach Anspruch 3, **dadurch gekennzeichnet, dass** die Brückeneinrichtung (38; 66; 106) ein erstes Brückenelement (44; 70; 110) umfasst, welches mit dem ersten Arm (36; 64; 104) verbunden ist, und ein zweites Brückenelement (46; 78; 112) umfasst, welches mit dem zweiten Arm (40; 68; 108) verbunden ist, wobei das erste Brückenelement (44; 70; 110) und das zweite Brückenelement (46; 78; 112) miteinander lösbar fixierbar sind, und insbesondere, dass eine Führungseinrichtung (56; 82) zur Verschiebung des ersten Brückenelements (44; 70; 110) und des zweiten Brückenelements (46; 78; 112) relativ zueinander vorgesehen ist, und insbesondere, dass die Führungseinrichtung (56; 82) eine Ausnehmung (48; 80) umfasst, welche an einem der Brückenelemente (44; 78) gebildet ist.

5. Lichtschrankenvorrichtung nach Anspruch 4, **dadurch gekennzeichnet, dass** das andere Brückenelement (70) in die Ausnehmung (78) eingetaucht ist oder dass an dem anderen Brückenelement (46) mindestens ein Durchtauchelement (52a, 52b) angeordnet ist, welches durch die Ausnehmung (44) durchgetaucht ist.

6. Lichtschrankenvorrichtung nach Anspruch 4 oder 5, **dadurch gekennzeichnet, dass** eines der Brückenelemente (70) eine Mehrzahl von Fixierungsausnehmungen (74) aufweist, wobei in eine Fixierungsausnehmung (74) ein Fixierungselement (94) einer Feststelleinrichtung (86) der Einstelleinrichtung (84) eintauchbar ist.

7. Lichtschrankenvorrichtung nach einem der Ansprüche 4 bis 6, **dadurch gekennzeichnet, dass** die Einstelleinrichtung (60; 84) eine Feststelleinrichtung (58; 86) umfasst, welche an einem der Brückenelemente (46; 78) angeordnet ist und mindestens ein Fixierungselement (52a, 54a, 52b, 54b; 94) für das andere Brückenelement (44; 70) aufweist, und insbesondere, dass das mindestens eine Fixierungselement eine Haltenase (94) für eine Fixierungsausnehmung (74) an dem anderen Brückenelement (70) ist, und insbesondere, dass die Feststelleinrichtung (86) schwenkbar gelagert ist, und insbesondere, dass die Feststelleinrichtung (86) federbeaufschlagt ist, wobei zur Lösung einer Fixierung die Federkraft zu überwinden ist.

8. Lichtschrankenvorrichtung nach Anspruch 7, **dadurch gekennzeichnet, dass** die Feststelleinrichtung (86) mindestens einen Sperrstift (100) zur einstellbaren Sperrung der Schwenkbarkeit aufweist.

9. Lichtschrankenvorrichtung nach einem der Ansprüche 1 bis 8, **dadurch gekennzeichnet, dass** der zweite Arm (38; 66; 106) parallel zu dem ersten Arm (36; 64; 104) ausgerichtet ist.

10. Lichtschrankenvorrichtung nach einem der Ansprüche 1 bis 9, **gekennzeichnet durch** ein Schwenklager (114; 122), über welches der zweite Arm (106; 120) feststellbar schwenkbar an dem ersten Arm (104; 118) oder einer Brückeneinrichtung (108) gelagert ist.

11. Lichtschrankenvorrichtung nach einem der Ansprüche 1 bis 10, **dadurch gekennzeichnet, dass** alle aktiven Elemente (18; 20) der Lichtschrankenvorrichtung an dem ersten Arm (36; 64; 104; 118) angeordnet sind.

12. Lichtschrankenvorrichtung nach einem der Ansprüche 1 bis 11, **dadurch gekennzeichnet, dass** der zweite Arm (38; 66; 106; 120) frei von Kabeln und elektrischen Elementen ist.

13. Lichtschrankenvorrichtung nach einem der Ansprüche 1 bis 12, **gekennzeichnet durch** mindestens eine Zweiwegigkeit für den Lichtweg zwischen dem ersten Arm (36; 64; 104; 118) und dem zweiten Arm (38; 66; 106; 120).

14. Lichtschrankenvorrichtung nach einem der Ansprüche 1 bis 13, **dadurch gekennzeichnet, dass** der Empfängereinrichtung (20) ein Polarisationsfilter (30) vorgelagert ist.

15. Lichtschrankenvorrichtung nach einem der Ansprüche 1 bis 14, **dadurch gekennzeichnet, dass** die Empfängereinrichtung (20) eine Schalthysterese aufweist, welche die Unterscheidung zwischen der Abwesenheit eines Gegenstands im Strahlengang und der Anwesenheit eines transparenten Gegenstands (32) im Strahlengang ermöglicht.
